# EUROPEAN PATENT SPECIFICATION

(11) **EP 1 037 752 B1**
(45) Date of publication and mention of the grant of the patent: **08.10.2003**
(21) Application number: 97950883.5
(22) Date of filing: 09.12.1997
(51) Int. Cl.: B60C 23/04

(54) **PNEUMATIC TYRE HAVING A TRANSPONDER AND AN ANNULAR ANTENNA AND METHOD OF MANUFACTURING SUCH A TYRE**
LUFTREIFEN MIT EINEM TRANSPONDER UND EINER RINGFÖRMIGEN ANTENNE UND VERFAHREN ZUR HERSTELLUNG EINES DERARTIGEN REIFENS
PNEUMATIQUE MUNI D'UN TRANSPONDEUR ET D'UNE ANTENNE ANNULAIRE ET PROCEDE DE FABRICATION D'UN TEL PNEUMATIQUE

(43) Date of publication of application: 27.09.2000
(73) Proprietor: THE GOODYEAR TIRE & RUBBER COMPANY, Akron, Ohio 44316-0001 (US)
(72) Inventor: DUNN, William, Frank, Stow, OH 44224 (US); BELSKI, Gary, Thomas, Massillon, OH 44646 (US); STARINSHAK, Thomas, Walter, Wadsworth, OH 44281 (US); SHAH, Amar, Arun, Akron, OH 44305 (US); MILLMIER, Raymond, Warren, Akron, OH 44319 (US); BROWN, Robert, Walter, Medina, OH 44256 (US); POLLACK, Richard, Stephen, Boulder, CO 80302 (US); STARKEY, Gene, Raymond, Niwot, CO 80503 (US)
(74) Representative: Leitz, Paul
(86) International application number: US9722463
(87) International publication number: WO99029522

(56) References cited:
- EP-A- 0 505 906
- WO-A-90/12474
- DE-A- 19 532 914
- US-A- 4 319 220
- US-A- 5 541 574

## Description

### Technical Field

This invention relates to a pneumatic tire and a method of manufacturing such a tire, the tire having an apparatus and an antenna for electronically transmitting tire or wheel identification or other data at radio frequency. The apparatus includes a radio-frequency transponder comprising an integrated circuit chip having data capacity at least sufficient to retain identification information for the tire or wheel. Other data, such as the inflation pressure of the tire or the temperature of the tire or wheel at the transponder location, can be transmitted by the transponder along with the identification data.

As illustrated by the references described below, it is known in the art to employ an annular antenna to transmit, at radio frequencies, data from a transponder contained within the structure of a tire or tire and wheel assembly. In practice, however, it is very difficult to do this with an antenna incorporated into the tire during the course of its manufacture. Both radial ply and bias ply tires undergo a substantial diametric enlargement during the course of manufacture. Bias ply tires are expanded diametrically when inserted into a curing press, which typically has a bladder that forces the green tire into the toroidal shape of the mold enclosing it. Radial ply tires undergo diametric expansion during the tire building or shaping process and a further diametric expansion during the course of curing. Any electronic circuitry coupled to an annular antenna built into the tire must be able to have its electrical connections survive this diametric enlargement of the tire during its manufacture. Furthermore, the annular antenna must be able to survive the repeated deformations occurring during tire use.

It is desirable to interrogate or read the data contained within or transmitted by the transponder at any position around the 360° circumference of the pneumatic tire.

A desirable feature of a transponder apparatus in a tire is that it be able to transmit tire pressure data if a pressure sensor is used in conjunction therewith. Also, it is desirable that the transponder be able to transmit information related to the temperature of the tire at the transponder location.

### Background Art

Tire safety indicator means have been provided in the prior art to indicate when the tread of a tire is worn to the point where the tread or the tire must be replaced. See for example De Cicco in U.S. Patent 3,770,040.

As the art has advanced, systems for monitoring vehicle tire pressure and the like have been proposed wherein a transmitter and a receiver are mounted on a vehicle body, and magnetically coupled inductor and enhancer circuits are carried on the vehicle wheel to provide monitoring of vehicle tire pressure, as described by Allen in U.S. Patent 4,588,978. Other devices to monitor tire pressure have been proposed by Galasko et al., in U.S. Patent 4,578,992, who teach a coil mounted in a tire which forms, with a capacitor, a passive oscillatory circuit. The circuit is energized by pulses supplied via a coil positioned outside the tire and secured to the vehicle, and the frequency in the passive oscillatory circuit is varied with tire pressure due to changes caused to the capacitance value of the capacitor. The frequency in the circuit is sensed by a coil positioned outside the tire and secured to the vehicle.

Milheiser, in U.S. Patent 4,730,188, teaches the use of a passive integrated transponder which is attached to or imbedded in an item to be identified, and is excited by an inductive coupling from an interrogator.

Fiorletta, in U.S. Patent 5,289,160, teaches a wireless tire pressure monitoring system which warns a driver of low pressure in one or more tires. Fiorletta teaches that a pressure transducer, transmitter and antenna are integrally housed and mounted to the tire stem of a tire. When the pressure transducer senses a tire pressure below a pre-selected pressure, the transmitter broadcasts a radio frequency signal that, upon detection by a receiver mounted on the vehicle, warns the driver. In a preferred embodiment, the transmitter is a device that is periodically interrogated by an RF signal from a transmitter on the vehicle.

In PCT Application WO90/12474, it is taught that electronic transponders can be embedded within or on vehicle tires with wire loop antennas and electromagnetically actuated by signals from an interrogator coil. The application indicates that the transponder responds to actuation by producing a shifted frequency modulated with synchronization pulses and identifying digital information, and can also be used to include information on the condition and environment of the tire.

Hettich et al., in U.S. Patent 5,140,851, teach a circuit arrangement for monitoring air volume in vehicle tires which provides correction for the temperature of the tire. The patent states that the temperature and pressure measurement value of the tire is measured by a rotating sensor on the wheel, which is monitored, and the data fed to a correction circuit which also receives a plurality of correction parameters. A corrected value for the temperature or for the air pressure in the tire is transmitted at output of the correction circuit as a function of the correction parameters.

PCT Application WO92/20539 provides an abnormal tire condition warning system which comprises a housing, a band for mounting the housing on the tire rim, a sensor for monitoring the condition within the tire, circuitry operatively connected to the sensor for generating radio signals indicative of the tire condition, a impedance supply operatively connected to the circuitry, a centrifugal switch and a receiver for receiving the radio signals.

Dunn et al., in U.S. Patent 4,911,217 describes a radio-frequency tire identification system having an integrated circuit chip transponder.

Pollack et al., in U.S. Patent 5,181,975, teach a tire having an integrated circuit transponder which comprises a coil antenna of small enclosed area, as compared to the area enclosed by the bead of the tire, which acts as a primary winding of a transformer. The coil is planar in shape, and when positioned between the innerliner and the carcass ply of the tire, may include a pressure sensor.

Brown et al., in U.S. Patent 5,218,861, teach a pneumatic tire having an integrated circuit transponder which has an antenna which is coupled by electric or magnetic fields to the bead of the tire.

Koch et al., in U. S. Patent 5,500,065 teaches locating a monitoring device radially inward of the inner liner in a pneumatic tire, somewhere in the crown portion of the tire.

In closest prior art document DE-A-19532914, it is taught to construct an antenna by winding a wire into an elastic spiral. The spiral revolving about the axis of rotation of the tire. The elastic property of the spiral tends to increase the diameter of the spiral by exerting a force in an outward direction toward the tread of the tire. Col. 10, lines 48-64. As a result, the spiral is held in the tire without need for support. Additionally, the elastic holding forced of the spirals prevent significant deformation of the wire. Col. 13, lines 23-37.

### Disclosure of the Invention

The invention provides a pneumatic tire as well as a method of manufacturing such tire as defined in the claims. It comprises an apparatus which can be built into a tire, is small enough that it does not have a noticeable affect on the operation of the tire, and is sturdy enough to withstand the millions of deformations that a tire undergoes during its use on a vehicle.

### Definitions

The following definitions are provided to facilitate the reading of the specification and the understanding of the invention.

"Heterodyne" refers to the additional sum and difference frequencies produced by mixing two sinusoidal alternating current sources.

"Transmitter" refers to a radio frequency emitter.

"Receiver" refers to a radio frequency receptor.

"Interrogator" refers to a transmitter-receiver decoder combination.

"Lines of flux" refers to magnetic intensity and the direction of the magnetic intensity vector.

"Transponder" refers to a receiver of RF energy capable of transmitting coded information to an interrogator (scanner).

"Equatorial plane (EP)" refers to the plane intersected at the tire centerline.

"Radially" refers to a radius line from a tire axis to a tire circumference, and lines parallel thereto.

### Brief Description of Drawings

Fig. 1 illustrates a cross section of a RMT (radial medium truck) tire having the apparatus of the invention embedded in the crown of the tire.
Fig. 2 illustrates a cutaway portion of Fig. 1 viewed radially outward from the rim.
Fig. 3 illustrates a diagram of one possible apparatus configuration.
Fig. 4 illustrates a diagram of an alternative apparatus configuration.
Fig. 5 illustrates a tire building drum with a rubber strip, an integrated chip and an inner liner.
Fig. 6 illustrates a side view of an alternative embodiment of a chip/antenna arrangement.
Fig. 7 illustrates a bottom view of the arrangement of Fig. 6.
Fig. 8 illustrates a chip with leads aligned with the carcass ply cords in a tire.
Fig. 9 illustrates an alternative configuration of the antenna of the invention.

### Best Mode for Carrying Out the Invention

### Industrial Applicability

An annular apparatus for electronically transmitting pneumatic tire or wheel identification or other data is provided. The apparatus comprises a transponder, including an integrated circuit chip and at least first and second electrical conductors coupled to the chip. The chip, upon externally-induced radio-frequency excitation, causes the data to be sequentially output from the chip as a voltage appearing between the first and second conductors. An antenna, which together with the transponder has an annular configuration and is coaxial with the tire or wheel. The antenna comprises springy steel wire, and in an illustrated embodiment, a filament wire wound into a helix and having a wire diameter of 0.04mm to 0.4mm.

As used herein, first and second conductors may be one wire circumventing a tire, wherein the first conductor is the end of the wire associated with one terminal of the transponder, and the second conductor is the end of the wire associated with the second terminal of the transponder.

The apparatus is substantially enclosed by nonconductive rubber and is located within the toroidal region of the tire.

The transponder is embedded in nonconductive materials to prevent significant shunt or electrical conduction between chips and the antenna which may be disposed over the chip. The antenna portion has a conformational relationship that permits 150 to 2000% elongation or more, of the antenna. Since the springy wire antenna is expanded in a manufactured tire and has an annular configuration and is coaxial with the tire, the spring exerts a force radially inward toward the axis of rotation of the tire. The spring is flexible and deforms when the tire deforms and can withstand the repeated deformations of the tire in use without significant fatigue. In the illustrated embodiment, the antenna portion is disposed around the EP of a tire in which it is incorporated.

Conductive rubber can be used to provide connection between various leads of the antenna and transponder. The conductive rubber has a tensile modulus of 300 to 400psi (2,067 to 2,759 kPa) at 50% elongation, an elongation of 270 to 350%, a max tensile of 1800-2100 (12,414 to 14,483 kPa) psi, brass coated steel wire/rubber adhesion of approximately 50 newtons force (75% rubber coverage) and T₉₀ cure time of 30 minutes.

Also provided is an antenna designed to receive a signal from a transmitting device for electronically activating the electronic circuit of the chip and for transmitting data from the electronic circuit to a receiving device.

Also provided is a pneumatic tire comprising at least two parallel annular beads, carcass plies wrapped around the beads, tread disposed over the carcass plies in a crown area of the tire, sidewalls disposed between the tread and the beads, and a sensing system disposed radially inward of the inner liner. The sensing system comprises the apparatus of the invention as described.

### Description of the Invention

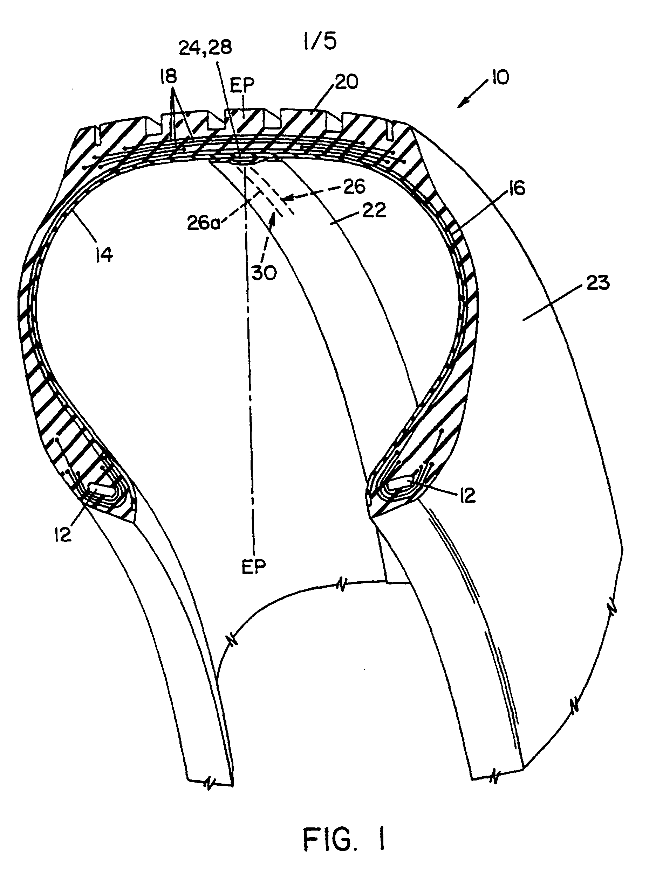

With reference now to Fig. 1, a tire 10 is illustrated which incorporates a transponder system 30, or signal generator, which can be used to provide tire data such as the inflation pressure within the tire, the temperature of the tire, and the tire identification. As is conventional in the art, the tire is made using at least one pair of annular beads 12 over which is wrapped at least one carcass ply 16. Belts 18 are disposed over carcass ply 16 in a crown area of the tire, and tread 20 is disposed over belts 18. Sidewalls 23 are disposed between tread 20 and beads 12. In the illustrated embodiment, the tire also has an innerliner 14 which is disposed radially below carcass ply 16.

The tire illustrated is an RMT (radial medium truck tire), but those skilled in the art will recognize that the apparatus of the invention may have utility in passenger tires, or any tire for which data on the history or the current condition of a tire is needed.

A tire, depending on the kind, may have up to 4 pairs of beads, up to 12 carcass plies, and up to 12 belts.

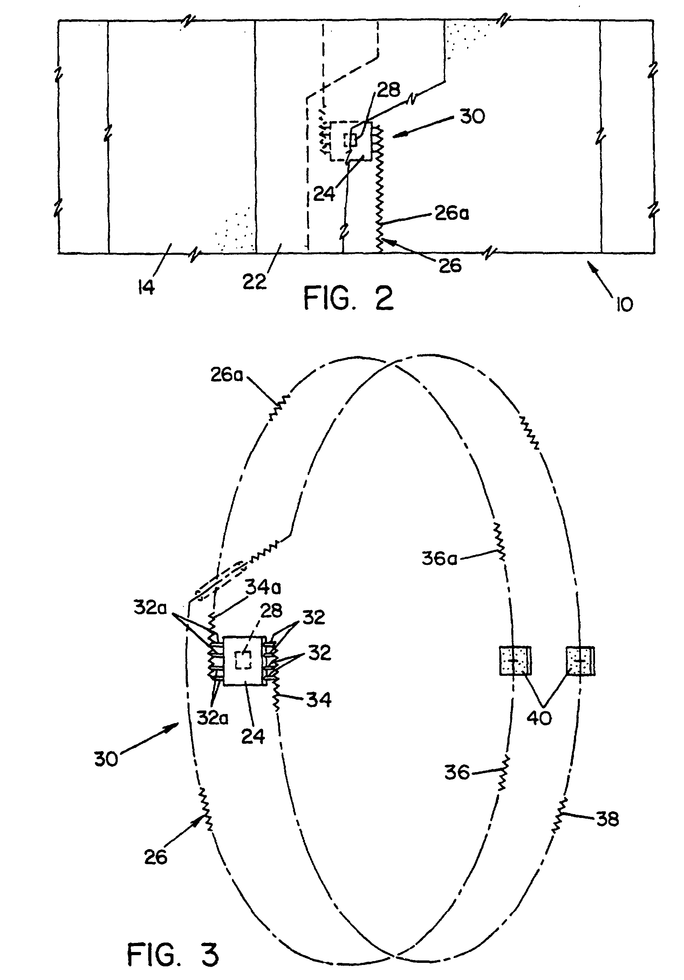

With reference also to Fig. 2, in the illustrated embodiment, transponder system 30 is disposed under the center of the tread, i.e. at the equatorial plane (EP) of the tire, and radially below carcass ply 16 and inner liner 14. Transponder system 30 comprises one or more integrated circuit chips 28, antenna 26 and any ancillary components needed for obtaining different kinds of data that may be desired, such as pressure sensors and the like. It is believed that this location in the tire provides the most accurate data, and makes the data of the tire more easily accessible whether the tire is mounted on a vehicle or stacked in the warehouse, since the data can be retrieved by bringing an interrogator near the tread at any portion of the tread around the 360° circumference of the tire.

Transponder system 30 is similar to that illustrated in U.S. Patents 5,181,975 and 5,218,861, assigned to The Goodyear Tire and Rubber Company, and commonly assigned EP-A- 1037753; 1037754; 1037755 , which provides identification data for the tire, and may be used to monitor tire pressure, the temperature of the tire, and the like. In the illustrated embodiment, the two to six chips of the transponder are enclosed in a hard plastic package containing all the circuitry needed to activate each of the chips. The chip package used in the illustrated embodiment was prepared for the inventors by Phase IV Engineering.

Antenna portion 26 may comprise any metal which provides conductivity sufficient to maintain an electrical circuit under the conditions in which it is employed in a tire, and can be drawn to a small diameter. The rubber of the tire will surround the wire of the antenna when the tire is molded.

Because of the expansion steps required in tire building, antenna 26 may be made of springy wire 26a capable of the kind of expansion required in the building of the tire.

In the illustrated embodiment, the antenna is a spring wherein the helix of the spring has a lay length equal to the diameter of the wire to about five times the diameter of the wire.

Consistent with the description in U.S. Patent 5,279,695, the preferred wire used for the antenna of the invention is commonly known as carbon steel, which is also called high-carbon steel, ordinary steel, straight carbon steel, and plain carbon steel. Examples of such a steel are American Iron and Steel Institute Grade 1070 and 1080-high carbon steel (AISI 1070 and 1080). Such steel owes its properties chiefly to the presence of carbon without substantial amounts of other alloying elements. U.S. Patent No. 4,960,473 discloses some preferred steel alloys and a process for manufacturing steel filaments which can be utilized in this invention. Those skilled in the art will recognize that other steels with higher carbon content and containing micro alloying elements such as chromium and boron can also be used.

As an alternative embodiment, the inventors herein speculate that copper clad steel will provide an antenna wire with particularly enhanced conductivity.

Brass is an alloy of copper and zinc which can contain other metals in varying lesser amounts. Alpha-brass, which contains from 63 % to 99% copper and from 1% to 37% zinc, is generally used in coating filaments for utilization in manufacturing filament and cables for reinforcing rubber articles. It is normally preferred for the brass to contain from 62% to 75% by weight of copper and from 38% to 25% of zinc. Iron-brass alloys, as described in U.S. Patent No. 4,446,198, can be utilized as well as other coatings, for example, zinc.

The helical antenna can be manufactured by using a spring-making apparatus such as a Torrin model W-100. The finish spring can be further annealed at 260°C for one hour to relax the spring to improve handling during assembly. The spring can be produced with various overall diameters, preferably 0.4 to 2 mm, with about 1mm being preferred.

The wire used in antenna portion 26 may have any diameter suitable for a specific application. In normal use it is believed that wire diameters of 0.04 to 0.4mm will have general utility. Preferably the wire diameter will be in the range of 0.06 to 0.2mm in passenger and radial medium truck (RMT) tires. In the illustrated embodiment, the wire has a diameter of 0.15mm.

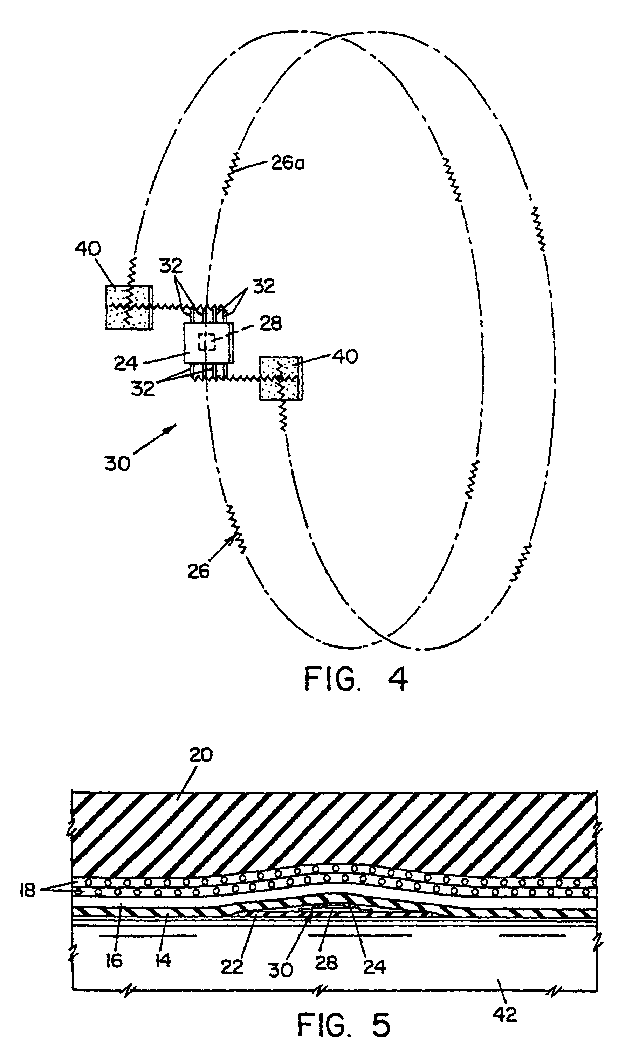

During the construction of a tire, there are three expansion changes within the tire structure which together cause the tire to expand 128% to 133% from its size on the building drum, see Fig. 5. An antenna with an expansion of 150% to 2000%, preferably 200 % to 1000% will have utility in the invention. The wire construction used in the illustrated embodiment may provide a design expansion of the antenna of as much as 1000%, or more. To minimize the resistance of the wire portion of the antenna, in the illustrated embodiment about 2 feet (61 cm) of spring wire is stretched to cover 6 feet (183 cm) of the tire circumference.

Antenna portion 26 may be provided, in the illustrated embodiment, in one to three turns around the tire. Although a sufficient signal may be obtained with one turn of antenna portion 26, the signal is boosted as additional turns are added since the amount of current developed is dependent on the number of lines of magnetic flux encountered by the antenna in accordance with Ampere's law. The efficiency of the antenna can also be improved by increasing the thickness of the brass coating on the antenna wire or by using copper clad steel in the antenna wire.

In the illustrated embodiment, chip 28 and antenna 26 are contained within non-conductive rubber strip 22, radially inward of the inner liner 14. Non-conductive rubber strip 22 may be 1/2 inch to four inches (1,27 to 10 cm) wide, and in the illustrated embodiment is about 1 inch (2,54cm) wide.

With reference to Fig. 2, in the illustrated embodiment two turns of antenna wire 26 are used. One turn passes over chip 28 but is insulated from chip 28 by a layer of high insulating epoxy 24.

With reference now to Fig. 3, in an alternative lay-up of the apparatus, two turns of antenna 26 are achieved by cutting of the leads 32 of integrated chip 28 and electrically connecting, such as soldering or embedding in conductive rubber, a first end 34 of one antenna wire 26 across leads 32 and embedding second end 36 in a conductive rubber 40, and a second springy antenna wire 26a is disposed in the same manner across leads 32a with a first end 34a being electrically connected to leads 32a and a second end 36a being embedded in conductive rubber 40. A section of the antenna 38 may be continuous over conductive rubber 40 or may be severed and connected at section of antenna 38 for ease of construction. Those skilled in the art will recognize that the extra turn of antenna 26 may be wound away from chip 28, instead of being disposed over chip 28. Compare Figs. 2 and 3.

Those skilled in the art will recognize that conductive rubber can be used wherever electrical connection between the antenna and the chips, or between portions of the antenna, is needed.

In an alternative lay-up, as illustrated in Fig. 4, two separate conductive rubber strips 40 may be employed to provide electrical connection between the two ends of antenna 26 and the two sets of leads 32. In such an embodiment, antenna wire 26 may be continuous.

When a conductive rubber matrix 40 is employed, it is preferred that a rubber matrix having a resistivity of 0.1-100 Ohm·cm be used. In the illustrated embodiment, rubber matrix 40 has an electrical resistivity in the range of 5-50 ohm·cm, and in the specific embodiment has a resistivity of 7 ohm·cm.

When rubber is stretched, its resistivity increases, and the 7 ohm·cm resistivity for the illustrated embodiment is obtained in the non-stretched rubber. When stretched 17%, the resistivity in the conductive rubber in the illustrated embodiment is about 10 ohm·cm

Epoxy used to insulate the chip in the illustrated embodiment is Dexter/Hysol FP4323.

The rubber used to insulate the chip and the antenna, is a non-conductive rubber that has a low loading, in the range of 0 to 10 phr, of non-conductive carbon black.

Insulating rubber must have properties which are consistent with its use in the tire. The insulating rubber used in the illustrated embodiment has a tensile modulus of 8852 to 9931 kPa (1240 to 1440 psi), an elongation at break of 585 to 785%, a Shore A hardness of 44 to 48, a 50% modulus of 44 to 54 N/cm² (65 to 80 psi) (448 to 552 kPa), a T₉₀ of 7 to 16 mins and specific gravity (sg) of 1.04 to 1.09.

Examples of insulating and conductive rubbers that may be used in the invention are described in U.S. patent 5743973

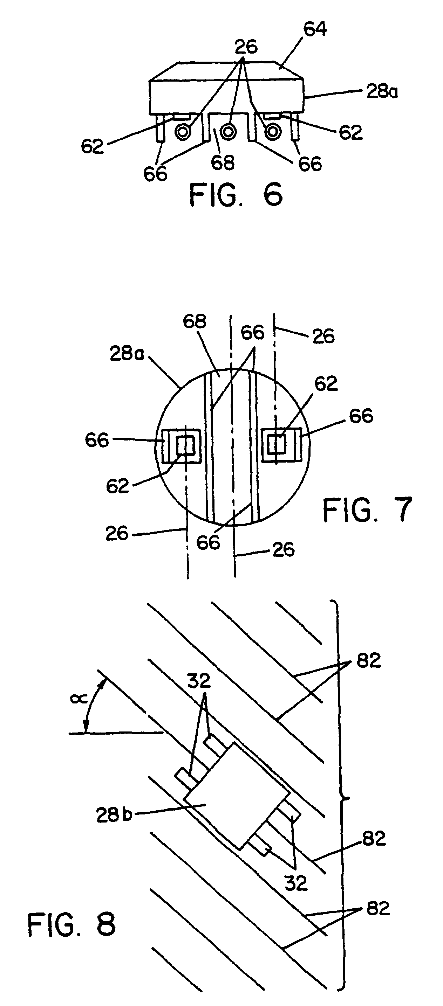

With reference now to Figs. 6 and 7, in an alternative embodiment of the chip 28 of the invention, chip 28 comprises a pressure sensor 64, in addition to other circuitry described above, and has contacts 62 on the opposite side of chip 28a from pressure sensor 64 and epoxy walls 66 dividing the bottom of chip 28a into sections. The channels 68 between walls 66 provide a route for helical wound antenna 26 to pass by or near chip 28a and contacts 62, while insulating the different turns of antenna 26 from each other and from chip 28a. Contact 62 may preferably be copper and may be flat or have a notch or hook or some other means to snag antenna 26 to help maintain contact.

With reference to Figs. 3 and 5, in the illustrated embodiment, when the tire is manufactured, a layer of nonconductive rubber 22, about one inch wide, is placed around the center of the building drum 42. A chip 28 is placed on the nonconductive rubber 22, and the antenna 26 is disposed in a loop. The antenna 26 is electrically connected to each of the transponder leads 32. The inner liner 14 is placed over the antenna 26 and the transponder 30,360° around the tire 10, insulating the apparatus from the carcass ply 16 and the belt structure 18 which are subsequently added to the building drum 42.

With reference now to Fig. 8, it has been found that in some tire constructions, aligning a chip 28b of the invention and its leads 32 with cords 82 in a carcass ply during construction of the tire reduces the stress on the chip and its leads 32 because the chip 28b rides with a cord 82 when the cords pantograph during construction, instead of being pulled between two adjacent cords. This helps prevent fracturing of the chip or separating the leads from the antenna during the expansion step of tire construction. For example, if the chip 28b is installed in a bias ply tire where the reinforcement cords are at an angle α of 58° with respect to the center line of the tire, the length direction of the chip package and its opposing leads will be aligned at an angle of 58° with respect to the center line of the tire. Likewise, in a radial tire where the carcass cords have an angle α of 90° with respect to the center line of the tire, chip 28a and its opposing leads 32 will be aligned at an angle of 90° with respect to the centerline of the tire.

Pantographing of carcass cords during construction of a radial tire is not as pronounced as the pantographing of carcass cords in a bias ply tire during construction, but aligning chip 28b with carcass cords 82 may reduce stress on chip 28b and leads 32 in any tire in which it is used. The tire is otherwise constructed in a manner known to those skilled in the art.

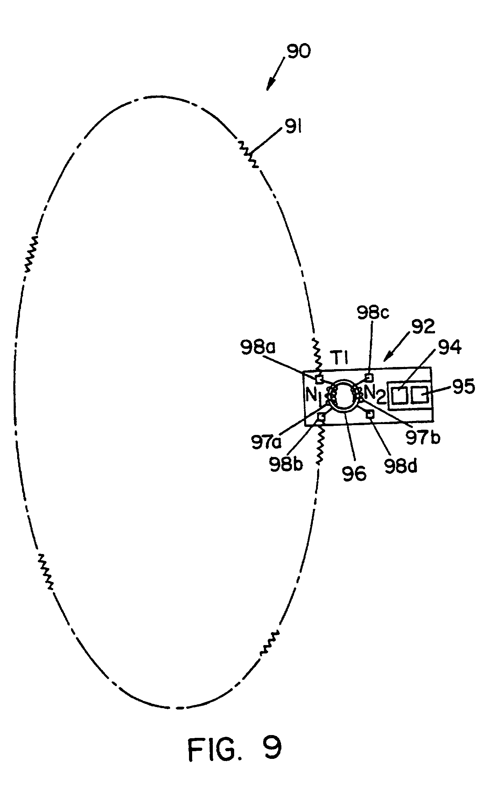

With reference to Fig. 9, it has been found that the response to the interrogator can be enhanced if the impedance of the antenna is closely matched to the impedance of the transponder, i.e. the impedances can be matched so that the antenna uses only the power needed to activate the transponder. The impedance of the interrogator and the transponder are matched using a ferrite core 96 to step up or step down the voltage of the transponder 92 using turns of magnet wire 97a, 97b wrapped around ferrite core 96. Accordingly, terminals 98a and 98b connect the opposite ends of turns 97a to opposing ends of antenna wire 91, and terminals 98c and 98d connect the opposite ends of turns 97b to chip 94. In the embodiment illustrated, pressure sensor 95 is located on the same circuit board as chip 94. As will be apparent to those skilled in the art, the function of the transponder and antenna in this embodiment and its construction using conductive rubber may be substantially as in the previous embodiments of the antenna herein described. Because of the enhanced response, antenna apparatus 90 need only comprise a single turn of wire 91.

In the illustrated embodiment of Fig. 9, the transponder package was prepared by Phase IV Engineering, of Boulder Colorado, using a 0.06 inch 0,15cm thick ferrite core having an O.D. (outside diameter) of 0.23 inch 0,58cm and an I.D. of 0.12 inch 0,3cm cat. Number 5975000101, available from Fair-Rite Products Corp., One Commercial Row, Wallkill, N.Y. 12589. The primary coil 97a was optimized at 19 turns and the secondary coil 97b was optimized at 80 turns using 38 gage copper magnet wire when a brass plated spring antenna wire 91 was used.

In the illustrated embodiment, when transponder system 30 is approached by an interrogator, the interrogator is designed to read the return signal from chip 24. The interrogator transmits at a specific radio frequency and the chip responds by stepping down the signal frequency to transmit one-half the scanner frequency in return. The scanner frequency is heterodyned against the signal frequency producing a difference side band to reinforce the signal response.

## Claims

1. A pneumatic tire (10) having at least two parallel annular beads (12), at least one carcass ply (16) wrapped around said beads (12), a tread (20) disposed radially outside of said at least one carcass ply (16) in a crown area of said tire, side walls (23) disposed between said tread (20) and said beads (12) and an inner liner (14), the inner liner (14) being located radially inward of the respective carcass ply (16), a sensing system disposed radially inward of the carcass plies (16) and the inner liner (14) of said tire (10), the sensing system having an apparatus for transmitting tire data comprising a transponder (30) for responding to predetermined signals which trigger a responsive signal for transmitting data and identification information, a chip (28) associated with the transponder (30) having capacity at least sufficient to transmit pressure data, tire temperature data, and identification information for the tire (10) and an antenna (26) having an annular configuration comprising springy wire associated with the leads of said transponder disposed coaxial with the tire, **characterized in that**
(a) the springy wire is a filament wire wound into a helix having a wire diameter of 0.06 mm to 0.2 mm and a lay length equal to the diameter of the wire to five times the diameter of the wire and about two feet (0,61 m) of spring wire is stretched to cover six feet (1,83 m) of the tire circumference, and **in that**
(b) the antenna (26) and the chip (28) are contained within a non-conductive rubber strip (22) radially inward of the inner liner (14).

2. The pneummatic tire (10) of claim 1, **characterized in that** the antenna is capable of elongation of 150% to 2000%; and **in that** the non-conductive rubber (22) has a tensile modulus of 1240 to 1440 psi (8,552 to 9,931 kPa), an elongation at break of 585 to 785%, a Shore A hardness of 44 to 48 and a 50% modulus of 65 to 80 psi (448 to 552 kPa).

3. The pneumatic tire of claim 1, **characterized in that** conductive rubber provides electrical connection between the antenna (26) and the chip (28), or between portions of the antenna.

4. The pneumatic tire of claim 3, **characterized in that** the conductive rubber has a tensile modulus of 300 to 400 psi (2,067 to 2,759 kPa) at 50% elongation, an elongation of 270 to 350%, a max tensile of 1800 to 2100 psi (12,414 to 14,483 kPa), a brass coated steel wire/rubber adhesion of approximately 50 newtons force (75% rubber coverage) and a T90 cure time of 30 minutes.

5. The pneumatic tire of claim 1 **characterized in that** the non-conductive rubber strip is 1/2 to 4 inches (1,27 to 10,16cm) wide.

6. Method of manufacturing a pneumatic tire (10) having an annular apparatus for electronically transmitting pneumatic tire identification or other data, comprising a transponder (30) including an integrated circuit chip (28) and at least a first and second electrical conductor (32) connected to the chip and an antenna (26) comprising a springy wire which together with the transponder has an annular configuration and is coaxial with the tire, the method comprising the steps of:
(a) placing a layer of non-conductive rubber (22), about one inch (2.54 cm) wide, around the center of a building drum (42);
(b) placing the transponder (30) on the non-conductive rubber (22):
(c) forming the springy wire by winding a filament wire into a helix having a wire diameter of 0.06 mm to 0.2 mm and a lay length equal to the diameter of the wire to five times the diameter of the wire and by stretching the spring wire so that about two feet (0,61m) of spring wire is stretched to cover six feet (1,83m) of the tire circumference;
(d) disposing the antenna (26) around the non-conductive rubber (22) in a loop;
(e) connecting the antenna (26) electrically to each of said electrical conductors (32); and
(f) placing an inner liner (14) over the antenna (26) and the transponder (30), 360° around the tire (10), insulating the apparatus from a carcass ply (16) and a belt structure (18) which are subsequently added to the building drum (42).

## Patentansprüche

1. Luftreifen (10) mit zumindest zwei parallelen ringförmigen Wülsten (12), zumindest einer Karkasslage (16), die um die Wülste (12) gewickelt ist, einer Lauffläche (20), die radial außen von der zumindest einen Karkasslage (16) in einem Kronenbereich des Reifens angeordnet ist, Seitenwänden (23), die zwischen der Lauffläche (20) und den Wülsten (12) angeordnet sind, und einer Innenseele (14), wobei die Innenseele (14) radial innen von der jeweiligen Karkasslage (16) angeordnet ist, einem Erfassungssystem, das radial innen von den Karkasslagen (16) und der Innenseele (14) des Reifens (10) angeordnet ist, wobei das Erfassungssystem eine Vorrichtung zur Übertragung von Reifendaten besitzt, welche
einen Transponder (30) zum Ansprechen auf vorbestimmte Signale, die ein Ansprechsignal zum Übertragen von Daten und Identifikationsinformationen auslösen, einen Chip (28), der zu dem Transponder (30) gehört und eine Kapazität besitzt, die zumindest ausreicht, um Druckdaten, Reifentemperaturdaten und Identifikationsinformationen für den Reifen (10) zu übertragen, und eine Antenne (26) umfasst, die eine ringförmige Gestalt mit elastischem Draht aufweist, der mit den Leitungen des Transponders verbunden ist, und koaxial mit dem Reifen angeordnet ist, **dadurch gekennzeichnet, dass**
(a) der elastische Draht ein Fadendraht ist, der zu einer Helix gewickelt ist und einen Drahtdurchmesser von 0,06 mm bis 0,2 mm und eine Schlaglänge aufweist, die gleich dem Durchmesser des Drahtes bis zu etwa fünfmal dem Durchmesser des Drahtes ist, und etwa zwei Fuß (0,61 m) Federdraht gestreckt sind, um sechs Fuß (1,83 m) des Reifenumfangs abzudecken, und dass
(b) die Antenne (26) und der Chip (28) innerhalb eines nicht leitfähigen Gummistreifens (22) radial innen von der Innenseele (14) eingeschlossen sind.

2. Luftreifen (10) nach Anspruch 1,
**dadurch gekennzeichnet, dass**
die Antenne zu einer Ausdehnung von 150 % bis 2000 % in der Lage ist; und dass der nicht leitfähige Gummi (22) einen Zugmodul von 1240 bis 1440 psi (8,552 bis 9,931 kPa), eine Bruchdehnung von 585 bis 785 %, eine Shore A-Härte von 44 bis 48 und einen 50 %-Modul von 65 bis 80 psi (448 bis 552 kPa) aufweist.

3. Luftreifen nach Anspruch 1,
**dadurch gekennzeichnet, dass**
leitfähiger Gummi eine elektrische Verbindung zwischen der Antenne (26) und dem Chip (28), oder zwischen Abschnitten der Antenne schafft.

4. Luftreifen nach Anspruch 3,
**dadurch gekennzeichnet, dass**
der leitfähige Gummi einen Zugmodul von 300 bis 400 psi (2,067 bis 2,759 kPa) bei einer Dehnung von 50 %, eine Dehnung von 270 bis 350 %, eine Höchstzugspannung von 1800 - 2100 psi (12,414 bis 14,483 kPa), eine Haftung messingbeschichteter Stahldraht/Gummi mit einer Kraft von ungefähr 50 N (75 % Gummiabdeckung) und eine T90 Vulkanisierzeit von 30 Minuten besitzt.

5. Luftreifen nach Anspruch 1,
**dadurch gekennzeichnet, dass**
der nicht leitfähige Gummistreifen ½ bis 4 Zoll (1,27 bis 10,16 cm) breit ist.

6. Verfahren zur Herstellung eines Luftreifens (10) mit einer ringförmigen Vorrichtung zur elektronischen Übertragung von Luftreifen-Identifikations- oder anderen Daten, umfassend einen Transponder (30) mit einem IC-Chip (28) und zumindest einem ersten und einen zweiten elektrischen Leiter (32), die an den Chip und eine Antenne (26) angeschlossen sind, welche einen elastischen Draht umfasst und welche zusammen mit dem Transponder eine ringförmige Gestalt besitzt und koaxial mit dem Reifen ist, wobei das Verfahren die Schritte umfasst, dass:
(a) eine Schicht von nicht leitfähigem Kautschuk (22), etwa ein Zoll (2,54 cm) breit, um die Mitte der Aufbautrommel (42) herum platziert wird;
(b) der Transponder (30) auf dem nicht leitfähigen Kautschuk (22) platziert wird;
(c) der elastische Draht durch Wickeln eines Fadendrahtes zu einer Helix mit einem Drahtdurchmesser von 0,06 mm bis 0,2 mm und einer Schlaglänge, die gleich dem Durchmesser des Drahtes bis zu etwa fünfmal dem Durchmesser des Drahtes ist, sowie durch Strecken des Federdrahtes, so dass etwa zwei Fuß (0,61 m) Federdraht gestreckt werden, um sechs Fuß (1,83 m) des Reifenumfangs abzudecken, gebildet wird;
(d) die Antenne (26) in einer Schleife um den nicht leitfähigen Kautschuk (22) herum angeordnet wird;
(e) die Antenne (26) elektrisch mit jedem der elektrischen Leiter (32) verbunden wird; und
(f) eine Innenseele (14) über die Antenne (26) und den Transponder (30), 360° um den Reifen (10) herum, platziert wird, wodurch die Vorrichtung von einer Karkasslage (16) und einem Gürtelaufbau (18) isoliert wird, welche nachfolgend der Aufbautrommel (42) hinzugefügt werden.

## Revendications

1. Bandage pneumatique (10) possédant au moins deux talons annulaires parallèles (12), au moins une nappe de carcasse (16) enveloppant lesdits talons (12), une bande de roulement (20) disposée en direction radiale à l'extérieur de ladite au moins une nappe de carcasse (16) dans une zone de couronne dudit bandage pneumatique, des flancs latéraux (23) disposés entre ladite bande de roulement (20) et lesdits talons (12), et un calandrage intérieur (14), le calandrage intérieur (14) étant disposé à l'intérieur, en direction radiale, de la nappe de carcasse respective (16), un système de détection disposé à l'intérieur, en direction radiale, des nappes de carcasse (16) et du calandrage intérieur (14) dudit bandage pneumatique (10), le système de détection possédant un appareil pour transmettre des données concernant le bandage pneumatique, comprenant un transpondeur (30) pour répondre à des signaux prédéterminés qui déclenchent un signal de réponse pour transmettre des données et des informations d'identification, une puce (28) associée au transpondeur (30) dont la capacité est au moins suffisante pour transmettre des données de pression, des données de température du bandage pneumatique et des informations d'identification pour le bandage pneumatique (10), ainsi qu'une antenne (26) possédant une configuration annulaire comprenant un fil métallique élastique associé aux fils conducteurs dudit transpondeur et disposée en position coaxiale avec le bandage pneumatique, **caractérisé en ce que**
(a) le fil métallique élastique est un fil métallique à filament enroulé en hélice possédant un diamètre du fil métallique de 0,06 mm à 0,2 mm et une longueur de pas égale au diamètre du fil métallique jusqu'à cinq fois le diamètre du fil métallique, environ deux pieds (0,61 mètre) du fil métallique élastique recouvrant à l'état étiré 6 pieds (1,83 m) de la circonférence du bandage pneumatique, et **en ce que**
(b) l'antenne (26) et la puce (28) sont contenus dans une bande de caoutchouc non-conducteur (22) disposée à l'intérieur du calandrage intérieur (14) en position radiale.

2. Bandage pneumatique (10) selon la revendication 1, **caractérisé en ce que** l'antenne présente une capacité d'allongement de 150 % à 2000 % ; et **en ce que** le caoutchouc non-conducteur (22) possède un module de traction de 1240 à 1440 psi (8552 à 9931 kPa), un allongement à la rupture de 585 à 785 %, une dureté Shore A de 44 à 48 et un module à 50 % de 65 à 80 psi (448 à 552 kPa).

3. Bandage pneumatique selon la revendication 1, **caractérisé en ce qu'**un caoutchouc conducteur procure une connexion électrique entre l'antenne (26) et la puce (28) ou entre des portions de l'antenne.

4. Bandage pneumatique selon la revendication 3, **caractérisé en ce que** le caoutchouc conducteur possède un module de traction de 300 à 400 psi(2067 à 2759 kPa) à un allongement de 50 %, un allongement de 270 à 350 %, une tension maximale de 1800 à 2100 psi (12.414 à 14.483 kPa), une adhérence entre le fil métallique en acier laitonné/caoutchouc d'approximativement 50 Newtons (pouvoir couvrant du caoutchouc de 75 %) et un temps de vulcanisation T90 de 30 minutes.

5. Bandage pneumatique selon la revendication 1, **caractérisé en ce que** la bande de caoutchouc non-conducteur possède une largeur de 1/2 à 4 pouces (1,27 10,16 cm).

6. Procédé de confection d'un bandage pneumatique (10) possédant un appareil annulaire pour la transmission électronique de données d'identification du bandage pneumatique ou d'autres données, comprenant un transpondeur (30) englobant une puce à circuits imprimés (28) et au moins des premier et deuxième conducteurs électriques (32) reliés à la puce et une antenne (26) comprenant un fil métallique élastique, antenne qui, de manière conjointe avec le transpondeur, possède une configuration annulaire et est disposée en position coaxiale avec le bandage pneumatique, le procédé comprenant les étapes consistant à :
(a) placer une couche de caoutchouc non-conducteur (22) sur une largeur d'environ 1 pouce (2,54 cm) autour du centre d'un tambour de confection (42) ;
(b) placer le transpondeur (30) sur le caoutchouc non-conducteur (22) ;
(c) former le fil métallique élastique en enroulant en hélice un fil métallique à filament possédant un diamètre du fil métallique de 0,06 mm à 0,2 mm et une longueur de pas égal au diamètre du fil métallique jusqu'à cinq fois le diamètre du fil métallique, et en étirant le fil métallique élastique de telle sorte qu'environ deux pieds (0,61 mètre) du fil métallique élastique recouvre à l'état étiré 6 pieds (1,83 m) de la circonférence du bandage pneumatique ;
(d) disposer l'antenne (26) autour du caoutchouc non-conducteur (22) en formant une boucle ;
(e) relier l'antenne (26) par voie électrique à chacun desdits conducteurs électriques (32) ; et
(f) placer un calandrage intérieur (14) par-dessus l'antenne (26) et le transpondeur (30), en formant un angle de 360 degrés autour du bandage pneumatique (10), en isolant l'appareil par rapport à une nappe de carcasse (16) et à une structure de ceintures (18) que l'on ajoute par la suite au tambour de confection (42).
